## Europäisches Patentamt
## European Patent Office
## Office européen des brevets

(19)

(11) Veröffentlichungsnummer: **0 091 642**
**B1**

(12) **EUROPÄISCHE PATENTSCHRIFT**

(45) Veröffentlichungstag der Patentschrift:
**24.08.88**

(51) Int. Cl.⁴: **G 11 B 5/84**

(21) Anmeldenummer: **83103313.9**

(22) Anmeldetag: **05.04.83**

(54) Verfahren zur Herstellung kreisförmiger magnetischer Aufzeichnungsmaterialien.

(30) Priorität: **10.04.82 DE 3213508**

(43) Veröffentlichungstag der Anmeldung:
**19.10.83 Patentblatt 83/42**

(45) Bekanntmachung des Hinweises auf die Patenterteilung:
**24.08.88 Patentblatt 88/34**

(84) Benannte Vertragsstaaten:
**DE FR GB NL**

(56) Entgegenhaltungen:
**EP - A - 0 041 321
DE - A - 2 357 517
FR - A - 2 280 165
US - A - 3 117 065
US - A - 4 075 672**

(73) Patentinhaber: **BASF Aktiengesellschaft,
Carl-Bosch-Strasse 38, D-6700 Ludwigshafen (DE)**

(72) Erfinder: **Schaefer, Dieter, Dr., Hauptstrasse 173,
D-6731 Lindenberg (DE)**
Erfinder: **Felleisen, Peter, Sedanstrasse 21,
D-6840 Lampertheim (DE)**
Erfinder: **Domas, Friedrich, Hasenweg 4,
D-6831 Altlussheim (DE)**
Erfinder: **Mayer, Dieter, Dr., Berner Weg 28,
D-6700 Ludwigshafen (DE)**

## Beschreibung

Die Erfindung betrifft ein Verfahren zur Herstellung kreisförmiger magnetischer Aufzeichnungsmaterialien, bestehend aus einem nichtmagnetischen Trägermaterial und einer darauf beidseitig aufgebrachten Magnetschicht, welche in einem polymeren Bindemittel fein verteilt anisotrope magnetische Teilchen enthält, wobei die Teilchen während der Verfestigung der Magnetschicht durch Anlegen eines orientierenden Magnetfeldes kreisförmig ausgerichtet werden.

Magnetische Speicherplatten werden in bekannter Weise so hergestellt, dass man kreisförmige Scheiben aus Aluminium oder Aluminiumlegierung, welche zur Aufnahme geeigneter Halterungs- und Antriebsmittel in der Mitte mit einem konzentrischen Ausschnitt versehen sind, mit einer flüssigen Dispersion, die ein magnetisierbares Material fein verteilt in einem polymeren Bindemittel enthält, überzieht und diesen Überzug anschliessend trocknet, härtet und anschliessend schleift und poliert. Zur Beschichtung hat sich das sogenannte spin coating-Verfahren besonders bewährt, bei dem die Trägerscheibe in Rotation versetzt und die Überzugsmischung aufgebracht wird, wie es z.B. in der US-Patentschrift 3 198 657 beschrieben ist. Andere bekannte Möglichkeiten zum Auftragen der Magnetschicht beruhen auf einem Eintauchen der Trägerscheibe in die flüssige Überzugsmischung oder auf einem Aufsprühen der Mischung.

Speicherscheiben auf der Basis von flexiblem Trägermaterial werden in grossen Mengen so hergestellt, dass fortlaufende Folienbahnen mit einer magnetischen Dispersionsschicht versehen, die Schicht getrocknet und die flexiblen Magnetscheiben ausgestanzt werden. Es gibt jedoch auch bei flexiblen Medien die Möglichkeit, insbesondere wenn gesteigerte Anforderungen an die Magnetschichtqualität gestellt werden, eine Einzelbeschichtung nach dem oben erwähnten spin coating-Verfahren, dem Tauch- oder dem Sprühverfahren durchzuführen.

Bekanntlich können die Speichereigenschaften von magnetischen Aufzeichnungsträgern verbessert werden, wenn die magnetisierbaren Teilchen, die insbesondere bei Verwendung von Chromdioxid und Gamma-Eisen(III)-oxid nadelförmig sind, ausgerichtet werden. Dabei werden die nadelförmigen Teilchen in der flüssigen Dispersion mit ihren grossen Achsen, die wegen der einachsigen Formanisotropie gleichzeitig die magnetischen Vorzugsrichtungen darstellen, durch ein homogenes magnetisches Feld in der vorgesehenen Aufzeichnungsrichtung und parallel zur Trägeroberfläche orientiert. Das homogene magnetische Feld ist in der Regel ein durch Dauermagnete oder gleichstromgespeiste Elektromagnete erzeugtes Gleichfeld, dessen Feldlinien parallel zur Aufzeichnungsrichtung und Trägeroberfläche verlaufen. Auch die gleichzeitige Anwendung eines magnetischen Wechselfeldes zur Verbesserung der Ausrichtung der Teilchen ist bereits beschrieben worden (DE-AS 1 118 483).

Bei der Benutzung scheibenförmiger magnetischer Aufzeichnungsträger, wie sie u.a. in der US-PS 3 176 281 beschrieben sind, werden die Informationen in konzentrischen kreisförmigen Spuren aufgezeichnet. Sollen nun die von den bandförmigen Aufzeichnungsträgern bekannten Vorteile der Erhöhung der Remanenz in der Aufzeichnungsrichtung durch eine Orientierung der anisotropen Teilchen auch auf die scheibenförmigen Aufzeichnungsmedien übertragen werden, so eignen sich die dort üblichen Verfahren und Vorrichtungen nicht, da die magnetischen Teilchen tangential zur Drehachse der Aufzeichnungsplatten ausgerichtet sein müssen.

Die Erzeugung eines ringförmigen Magnetfeldes durch einen senkrecht zum Mittelpunkt der kreisförmigen Aufzeichnungsplatte angebrachten Leiter ist für eine gleichmässige Ausrichtung der magnetischen Teilchen in tangentialer Richtung nicht geeignet, da die Stärke des Magnetfeldes nach aussen hin stark abnimmt und sich somit die Ausrichtung in den Innenspuren von der in den Aussenspuren unterscheidet.

In der DE-OS 1 952 627 wird eine Vorrichtung zur Herstellung von Magnetplattenstapeln, die an ihrer Oberfläche mit einer magnetisch anisotropen Kupfer-Kobaltschicht bedampft werden, beschrieben. Diese Vorrichtung beinhaltet einen von mehreren Seiten begrenzten Durchflutungsquerschnitt, wobei die Aufzeichnungsträger an einer unbegrenzten Seite des Durchflutungsquerschnitts in diesen eingesetzt und entfernt werden. Das in der DE-OS 1 952 627 dargestellte Verfahren hat jedoch den Nachteil, dass zur Einbringung der Platten ein Querschnitt, der der einer vollen Plattenfläche entspricht, nicht von Leitern begrenzt ist und somit nicht zur Erzeugung eines Magnetfeldes genutzt wird und demzufolge aufgrund der resultierenden Magnetfeldinhomogenität eine unterschiedliche Ausrichtung von Ober- und Unterschicht die Folge ist.

Es wurde auch schon vorgeschlagen, die Trägerscheibe mit der noch nicht erstarrten Beschichtung zwischen zwei parallele Ebenen von Stromleitern zu bringen, wobei die Stromleiter derart angeordnet sind, dass sie auf beiden Seiten der Trägerplatte parallel zur Trägerplattenebene vom inneren kreisförmigen Plattenausschnitt radial zur äusseren Plattenbegrenzung führen und durch die Stromrichtung, welche in den beiden Ebenen geführten Stromleitern entgegengesetzt verläuft, ein Magnetfeld erzeugt wird, in dessen Mittelebene sich die beschichtete Trägerplatte befindet, wodurch die magnetisch anisotropen Teilchen in der Plattenebene tangential, bezogen auf die zur Plattenebene senkrechten Drehachse, ausgerichtet und durch Trocknen verfestigt werden (DE-OS 24 35 096). Ebenfalls zur kreisförmigen Ausrichtung der anisotropen magnetischen Teilchen kann ein in der DE-PS 23 57 517 beschriebenes Verfahren herangezogen werden. Hierbei wirkt auf die noch flüssige Magnetschicht ein magnetisches Feld ein, das sich in der Symmetrieebene zwischen zwei Paaren von jeweils gleichnamigen Magnetpolen ausbildet.

Die Fortentwicklung der magnetischen Speichertechnik zu immer höheren Speicherdichten auf den magnetischen Aufzeichnungsträgern erfordert aufgrund der Prinzipien der Aufzeichnungstechnik eine ständige Verringerung der Magnetschichtdicken. Während die Aufzeichnungsfläche für eine Einzelinformation (bit) durch die geringeren Spurabstände einerseits und die höhere lineare Aufzeichnungsdichte andererseits abnimmt, steigt damit die Fehlerrate proportional an. Da bei einer Schichtstärke von etwa 1 µm, einer Spurbreite von 25 µm und einer bit-Länge von 5 µm bei modernen Aufzeichnungsgeräten schon geringste Unregelmässigkeiten in der Magnetschicht, wie mikroskopisch kleine Löcher (pin holes) zu Fehlern, d.h. elektromagnetischen Fehlstellen in der Datenaufzeichnung führen, muss die Homogenität der Magnetschicht ausserordentlich hoch sein. Durch eine Anpassung der Zusammensetzung der die Magnetschicht bildenden Komponenten und eine Verbesserung der Dispergier- und Auftragstechnik lassen sich bei nicht ausgerichteten Speicherschichten die gestellten Anforderungen weitgehend erfüllen. Dies gilt jedoch nicht, sofern mit den bekannten Verfahren versucht wird, die anisotropen magnetischen Teilchen kreisförmig auszurichten.

Es bestand daher die Aufgabe, ein Verfahren bereitzustellen, das es ermöglicht, die auf eine Trägerscheibe aufgebrachten anisotropen magnetischen Teilchen verteilt in der noch nicht erstarrten Schicht in Aufzeichnungsrichtung, d.h. kreisförmig auszurichten und gleichzeitig ein höchstes Mass an Schichtqualität auch bei dünnsten Schichten zu erreichen.

Es wurde nun gefunden, dass sich kreisförmige magnetische Aufzeichnungsträger mit kreisförmiger magnetischer Vorzugsausrichtung durch Auftragen einer anisotrope magnetische Teilchen, polymere Bindemittel, organische Lösungsmittel und übliche Zusatzstoffe enthaltenden flüssigen Dispersion auf unmagnetische Kreisförmige Trägerscheiben, Ausrichten der anisotropen Teilchen in der Dispersionsschicht parallel zur Ebene der Trägerscheibe und tangential zu einer Drehbahn mit senkrecht auf der Trägerebene stehender Drehachse durch Einwirkung eines orientierenden magnetischen Gleichfeldes, Überführen der Beschichtung in eine feste Magnetschicht und gegebenenfalls anschliessendes Schleifen und Polieren der Magnetschicht mit den geforderten Eigenschaften herstellen lassen, wenn die Ausrichtung der anisotropen magnetischen Teilchen in der noch flüssigen Dispersionsschicht durch ein von Null innerhalb von 3 bis 60 Sekunden auf Werte oberhalb der Koerzitivfeldstärke der magnetischen Teilchen ansteigendes magnetisches Gleichfeld erzeugt wird.

Wesentlich für das erfindungsgemässe Verfahren ist somit, dass das orientierende magnetische Gleichfeld nicht sofort auf den für die Orientierung der magnetischen Teilchen optimalen Betrag der Feldstärke des Magnetfeldes gebracht wird, sondern wie angegeben von Null ausgehend auf den mehr als 1-fachen bis zum 7-fachen Wert der Koerzitivfeldstärke der magnetischen Teilchen, vorzugsweise auf das 2 bis 4fache der Koerzitivfeldstärke gesteigert wird. Die Dauer des Anstiegs des Magnetfeldes von 3 bis 60 Sekunden richtet sich im allgemeinen nach dem Zeitraum in dem sich die flüssige Beschichtung durch Verdunsten des Lösungsmittels soweit verfestigt hat, dass die Teilchen in der Schicht nicht mehr beweglich sind. Üblicherweise genügt für die Phase des Feldanstiegs ein Zeitraum von etwa 15 Sekunden, an den sich weitere 15 Sekunden unter Beibehaltung der Endfeldstärke bis zur beginnenden Schichtverfestigung anschliessen. Die genannten Zeiten können gegebenenfalls kürzer sein, sofern spezielle Trocknungsverfahren, wie Warmluft oder IR-Strahler, eingesetzt werden.

Bei der Ausarbeitung des erfindungsgemässen Verfahrens hat es sich als besonders vorteilhaft erwiesen, die Magnetfeldstärke ab einem Zeitpunkt vor beginnender Orientierung der Magnetteilchen, also gerade unterhalb der Koerzitivfeldstärke des Magnetpigments und während der Orientierung der Hauptmenge des Pigments, also im Bereich der Pigmentkoerzitivfeldstärke, langsam linear ansteigen zu lassen. Ist die Hauptmenge der magnetischen Teilchen ausgerichtet, so kann ab diesem Zeitpunkt bis zur Endfeldstärke das Magnetfeld schneller ansteigen.

Die Ausrichtung der ferromagnetischen Teilchen wird zweckmässigerweise so ausgeführt, dass die Trägerscheibe mit der noch nicht erstarrten magnetischen Beschichtung in eine Vorrichtung zur Erzeugung eines ringförmigen Magnetfeldes gebracht und das Magnetfeld durch Hochfahren des Spulenstromes langsam gesteigert wird. Eine entsprechende Vorrichtung ist beispielsweise in der DE-OS 24 35 096 beschrieben.

Eine andere Möglichkeit zur Ausrichtung der Teilchen im langsam ansteigenden Magnetfeld besteht darin, die mit der noch nicht erstarrten Beschichtung versehene Trägerscheibe am Feld eines parallel zur Aufzeichnungsrichtung angeordneten Elektromagneten vorbeirotieren zu lassen oder zwischen den Feldern eines Magnetpaares hindurchrotieren zu lassen, wobei das Anwachsen des Magnetfeldes wiederum durch das Hochfahren des Spulenstromes geregelt wird. Ein solches Verfahren und eine entsprechende Vorrichtung ist in der DE-PS 23 57 517 offenbart. Die Stärke des Richtfeldes lässt sich auch über den Abstand der Magnete zur Beschichtung regulieren. Hierbei wird das anwachsende Magnetfeld durch radiales und/oder achsiales Zuführen eines von einem Magneten oder Magnetpaar ausgehenden Magnetfeldes zur rotierenden und mit der noch flüssigen Beschichtung versehenen Trägerscheibe erzeugt.

Mit Hilfe des erfindungsgemässen Verfahrens ist es möglich, extrem dünne Dispersionsschichten mit einem sehr hohen Anteil an magnetischem Material zu erhalten, welche sich durch einen hohen Richtfaktor auszeichnen, ohne dass gleichzeitig Fehlstellen wie kleinste Risse oder Löcher in der Magnetschicht, die Qualität vermindern. Richtfaktor einer Magnetschicht ist Quotient aus dem remanenten magnetischen Fluss längs zur Orientierungsrichtung und dem remanenten magentischen Fluss quer dazu.

Die nachstehenden Beispiele sollen das erfindungsgemässe Verfahren veranschaulichen und seine Vorteile gegenüber dem Stand der Technik durch die Vergleichsversuche belegen.

Beispiel 1

Eine für die Herstellung von üblichen Magnetspeicherplatten eingesetzte Magnetdispersion auf der Basis von Eisenoxidteilchen von 0,5 µm Länge, einem Durchmesser von 0,08 µm und einer Koerzitivfeldstärke von 24 kA/m wird mittels des üblichen spin Coating-Verfahrens beidseitig auf eine 14 Zoll-Aluminiumträgerscheibe aufgetragen. Unmittelbar nach dem Auftragen wird durch Richtmagnete, wie sie in der DE-OS 30 10 873 beschrieben sind, jeweils auf beiden Seiten der beschichteten Trägerscheibe ein magnetisches Gleichfeld aufgebaut. Unter fortwährender Rotation der beschichteten Trägerscheibe mit 60 Upm wird das Magnetfeld innerhalb von 20 Sekunden bis zur beginnenden Schichtverfestigung auf 50 kA/m gesteigert. Nach dem sich anschliessenden üblichen Trocknen, Einbrennen und Polieren der Magnetschicht wird der Richtfaktor und die Fehlerzahl bestimmt.

Hierzu wird auf einem Prüflaufwerk eine Signalausfallprüfung (missing pulse test) vorgenommen. Dazu wird mit einem Datenprüfkopf eine Flusswechselfrequenz 2f geschrieben und gleichzeitig gelesen. Als Fehler wird jedes Lesesignal gewertet, dessen Amplitude geringer als 60% des Amplitudenmittels ist.

Die Messergebnisse sind in der Tabelle angegeben.

Vergleichsversuch A

Es wird wie in Beispiel 1 beschrieben verfahren, jedoch wird das orientierende Magnetfeld mit dem Einschalten auf den vollen Wert von 50 kA/m gebracht. Die Messergebnisse sind in der Tabelle angegeben.

Vergleichsversuch B

Die Beschichtung der Trägerplatte erfolgt wie in Beispiel 1 angegeben. Man lässt unter Rotieren der beschichteten Trägerplatten einen Teil des flüchtigen Lösungsmitteln abdunsten (Verweilzeit 10 sec) und schaltet dann das Richtfeld von 50 kA/m ein, wobei die Platte bis zur Schichtverfestigung weiterhin in Rotation bleibt. Die Weiterbehandlung erfolgt wie in Beispiel 1 beschrieben. Die Messergebnisse sind in der Tabelle angegeben.

Beispiel 2

Es wird wie in Beispiel 1 beschrieben verfahren, jedoch wird für die Beschichtung des Aufzeichnungsträgers eine Magnetdispersion mit $CrO_2$-Teilchen von 0.6 µm Länge, einem Durchmesser von 0.1 µm und einer Koerzitivfeldstärke von 35 kA/m verwendet. Entsprechend der Koerzitivfeldstärke des $CrO_2$-Pigments wird das Richtfeld von Null beginnend innerhalb von 20 Sekunden auf 70 kA/m gesteigert. Die Messergebnisse sind in der Tabelle angegeben.

Vergleichsversuch C

Es wird wie in Beispiel 2 beschrieben verfahren, jedoch wird das orientierende Magnetfeld mit dem Einschalten auf den vollen Wert von 70 kA/m gebracht. Die Messergenisse sind in der Tabelle angegeben.

Vergleichsversuch D

Die Beschichtung der Trägerplatte erfolgt wie in Beispiel 2 angegeben. Man lässt unter Rotation der beschichteten Trägerplatten einen Teil des flüchtigen Lösemittels abdunsten (Verweilzeit 10 sec) und schaltet dann das Richtfeld von 70 kA/m, wobei die Platte bis zur Schichtverfestigung weiterhin in Rotation bleibt. Die Weiterbehandlung erfolgt wie in Beispiel 2 beschrieben. Die Messergenisse sind in der Tabelle angegeben.

Tabelle

| | Richtfaktor | Fehlerzahl/ Datenträger-oberfläche |
|---|---|---|
| Beispiel 1 | 2.8 | 2 |
| Vergleichsversuch A | 2.8 | 83 |
| Vergleichsversuch B | 2.1 | 4 |
| Beispiel 2 | 3.2 | 0 |
| Vergleichsversuch C | 3.2 | 45 |
| Vergleichsversuch D | 2.6 | 6 |

**Patentansprüche**

1. Verfahren zur Herstellung von kreisförmigen magnetischen Aufzeichnungsträgern mit kreisförmiger magnetischer Vorzugsausrichtung durch Auftragen einer anisotrope magnetische Teilchen, polymere Bindemittel, organische Lösungsmittel und übliche Zusatzstoffe enthaltenden flüssigen Dispersion auf unmagnetische kreisförmige Trägerscheiben, Ausrichten der anisotropen Teilchen in der Dispersionsschicht parallel zur Ebene der Trägerscheibe und tangential zu einer Drehbahn mit senkrecht auf der Trägerebene stehender Drehachse durch Einwirkung eines orientierenden magnetischen Gleichfelds, Überführen der Beschichtung in eine feste Magnetschicht und gegebenenfalls anschliessendes Schleifen und Polieren der Magnetschicht, dadurch gekennzeichnet, dass die Ausrichtung der anisotropen magnetischen Teilchen in der noch flüssigen Dispersionsschicht durch ein von Null innerhalb von 3 bis 60 Sekunden auf Werte oberhalb der Koerzitivfeldstärke der magnetischen Teilchen ansteigendes magnetisches Gleichfeld erzeugt wird.

2. Verfahren gemäss Anspruch 1, dadurch gekennzeichnet, dass das orientierende magnetische Gleichfeld während der Rotation der beschichteten Trägerscheibe innerhalb von 3 bis 60 Sekunden ansteigend von Null auf den mehr als 1- bis zum 7-fachen Wert der Koerzitivfeldstärke der in der Schicht vorhandenen magnetischen Teilchen gebracht wird.

3. Verfahren gemäss Anspruch 1, dadurch gekennzeichnet, dass das Magnetfeld von einer mit ansteigendem Strom durchflossenen Ringspule erzeugt wird, in deren Durchflutungsquerschnitt die Trägerplatte mit der noch nicht erstarrten Magnetdispersionsschicht gebracht wird.

4. Verfahren gemäss Anspruch 1, dadurch gekennzeichnet, dass das Magnetfeld von während des Ausrichtvorganges in konstantem Abstand zur Magnetdispersionsschicht angeordneten und mit ansteigendem Strom durchflossenen Elektromagneten oder Magnetpaaren erzeugt wird und dass der Träger mit der noch nicht erstarrten Schicht in Drehrichtung bewegt wird.

5. Verfahren gemäss Anspruch 1, dadurch gekennzeichnet, dass das ansteigende Magnetfeld durch Änderung der Position der Magnete oder Magnetpaare zur Magnetschicht hin erzeugt wird und dass der Träger mit der noch nicht erstarrten Schicht in Drehrichtung bewegt wird.

## Claims

1. A process for the production of circular magnetic recording media having a circular preferred orientation of magnetization by applying a liquid dispersion, containing anisotropic magnetic particles, polymeric binders, organic solvents and conventional additives, onto non-magnetic circular base disks, orienting the anisotropic particles in the dispersion layer parallel to the plane of the base disk and tangentially to a line of rotation having an axis of rotation which is at right angles to the base plane by the action of an orienting magnetic d.c. field, converting the coating to a solid magnetic layer and, where necessary, subsequently grinding and polishing the magnetic layer, wherein the orientation of the anisotropic magnetic particles in the as yet liquid dispersion layer is produced by a magnetic d.c. field which in from 3 to 60 seconds rises from zero to values above the coercive force of the magnetic particles.

2. A process as claimed in claim 1, wherein during the rotation of the coated base disk the orienting magnetic d.c. field is raised in from 3 to 60 seconds from zero to a value ranging from more than 100% to 700% of the coercive force of the magnetic particles present in the layer.

3. A process as claimed in claim 1, wherein the magnetic field is generated by a circular coil through which an increasing current flows, the base disk, carrying the as yet not solidified layer of magnetic dispersion, being introduce into the flux cross-section of the coil.

4. A process as claimed in claim 1, wherein the magnetic field is generated by electromagnets or pairs of magnets which during the orientation process are at a constant distance from the layer of magnetic dispersion and have an increasing current flowing through them, the base, carrying the as yet not solidified layer, being caused to rotate.

5. A process as claimed in claim 1, wherein the increase in the magnetic field is caused by varying the position of the magnets or pairs of magnets relative to the magnetic layer, the base, carrying the as yet not solidified layer, being caused to rotate.

## Revendications

1. Procédé de fabrication de supports d'enregistrement magnétiques circulaires à orientation magnétique préférentielle circulaire par application d'une dispersion liquide, contenant des particules magnétiques anisotropes, un liant polymère, un solvant organique et des additifs usuels, sur un disque support circulaire non magnétique, orientation des particules anisotropes dans la couche de dispersion parallèlement au plan du disque support et tangentiellement à une piste tournante d'axe de rotation perpendiculaire au plan du support, par action d'un champ mangétique continu d'orientation, transfert de la couche enduite dans une couche magnétique et éventuellement meulage et polissage de la couche magnétique, caractérisé par le fait que l'on opère l'orientation des particules magnétiques anisotropes dans la couche de dispersion encore liquide par un champ magnétique continu passant en 3 à 60 secondes, de zéro à une valeur supérieure à l'intensité de champ coercitif des particules magnétiques.

2. Procédé selon la revendication 1, caractérisé par le fait qu'on fait croître le champ magnétique continu d'orientation, pendant la rotation du disque support enduit, en 3 à 60 secondes, d'une valeur nulle à 1 à 7 fois la valeur de l'intensité de champ coercitif des particules magnétiques présentes dans la couche.

3. Procédé selon la revendication 1, caractérisé par le fait que le champ magnétique est produit par une bobine annulaire, parcourue par un courant croissant, dans la section de passage de laquelle on place la plaque support munie de la couche de dispersion magnétique non encore durcie.

4. Procédé selon la revendication 1, caractérisé par le fait que le champ magnétique est produit par des électro-aimants ou des paires d'aimants, parcourus par un courant croissant et disposés à distance constante de la couche de dispersion magnétique pendant le processus d'orientation et le support, avec la couche non encore durcie, est déplacée dans la direction de rotation.

5. Procédé selon la revendication 1, caractérisé par le fait que le champ magnétique croissant est produit par modification de la position des aimants ou paires d'aimants par rapport à la couche magnétique et le support, avec la couche non encore durcie, est déplacé dans la direction de rotation.